(19) Europäisches Patentamt
European Patent Office
Office européen des brevets

(11) Publication number: **0 079 995**
**B1**

(12) # EUROPEAN PATENT SPECIFICATION

(45) Date of publication of patent specification: **05.03.86**

(51) Int. Cl.$^4$: **G 06 F 9/32**

(21) Application number: **81305553.0**

(22) Date of filing: **24.11.81**

(54) **Information handling apparatus having an instruction-executing function at a high speed.**

(43) Date of publication of application:
**01.06.83 Bulletin 83/22**

(45) Publication of the grant of the patent:
**05.03.86 Bulletin 86/10**

(84) Designated Contracting States:
**DE FR GB**

(56) References cited:
**US-A-3 408 630**
**US-A-3 577 190**

**IBM TECHNICAL DISCLOSURE BULLETIN, vol. 22, no. 1, June 1979, pages 304-306, New York (USA); R.L. HOFFMAN et al.: "Branch instruction execution sequence"**

**PATENTS ABSTRACTS OF JAPAN, vol. 5, no. 115, 24th July 1981, pages(P-72)(787);**

(73) Proprietor: **NEC CORPORATION**
**33-1, Shiba 5-chome, Minato-ku**
**Tokyo 108 (JP)**

(72) Inventor: **Kimoto, Manabu**
**c/o Nippon Electric Co. Ltd. 33-1, Shiba Gochome**
**Minato-ku Tokyo (JP)**

(74) Representative: **Pears, David Ashley et al**
**REDDIE & GROSE 16 Theobalds Road**
**London WC1X 8PL (GB)**

**EP 0 079 995 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to information handling apparatus with a memory for storing instructions, addressing means coupled to the memory for reading instruction units out of the memory sequentially, a decoder for decoding instruction units read out of the memory, control means controlling the apparatus in response to the decoded instruction units including controlling the addressing means for sequential advance of addresses.

Such an apparatus (referred to below as apparatus of the type defined) is commonly implemented as a microprocessor or other computer in which an instruction may consist of more than addressable unit and, more significantly, may consist of a variable number of addressable units. An addressable unit is a byte in the case of an 8-bit computer such as the well known Z-80 which has instructions 1, 2, 3 and 4 bytes long. For convenience the ensuing description is written largely in terms of bytes, rather than the more general term "addressable unit".

Although many instructions are addressed sequentially, computers rely upon being able to change the sequence, especially by jump or branch instructions which include bytes specifying the address to which the jump or branch is to be made (either as an absolute address or an address relative to the current address). See for example an article "Branch Instruction Execution Sequence" Hoffman et al, IBM Technical Disclosure Bulletin Vol. 22 No. 1 June 1979 pp 304—306. Many jump or branch instructions are conditional and US 3 408 630 describes a technique for speeding up the operation of a computer by cutting short a conditional branch instruction when the relevant condition is not met. In effect, the latter bytes of the branch instruction are jumped to arrive at the next instruction in the sequence without delay.

Another known instruction used in changing the instruction sequence is a skip instruction, whereby the program proceeds from the skip instruction not to the first following instruction but to the second following instruction. It is known to do this, as described below with reference to Fig. 2, by ignoring all bytes of the instruction to be skipped, treating them as NOP (no-operation) bytes. This wastes machine cycles. It is also known (US 3 577 190) to flag the instruction (or instructions) to be skipped. When the skip condition is met, the computer shifts through the bytes of the or each flagged instruction. This technique is not feasible in microprocessors with small addressable units, such as 8-bit microprocessors. The instruction bytes do not have a bit available for use as the required flag.

It is known from Patent Abstracts of Japan Vol. 5, No. 115, 24 July 1981, page (P-72)(787), Japanese Patent Publication 56-57147, to effect a skip operation by incrementing the instruction address by 2, instead of by 1 as in normal sequential execution. This technique is only suitable for a very simple computer with fixed length instructions, more specifically single byte instructions.

Having regard to this prior art, the present invention is concerned in the first place with apparatus of the type defined wherein the memory stores instructions including a skip instruction, a first following instruction composed of a plurality of addressable units and a second following instruction and including skip signal means coupled to the decoding means for generating a skip signal when the skip instruction is read out of the memory, and address skip means coupled to the skip signal means for jumping on to an address designating the second following instruction. The first object of the invention is to provide a simple means of skipping an instruction even when this may be of varying length, without modifying the instruction to be skipped in any way.

The invention is characterised in that the addressing means advance to the address of the said first following instruction and the address skip means then rapidly increment the address of the first unit of the said first following instruction by the number of units of which the said first following instruction is composed of the said number being supplied to the address skip means by the decoder.

In contrast to the reference last mentioned above, the target address is determined not by applying a fixed increment to the current address (the skip instruction address) but by applying a variable increment to the next instruction address, the variable increment being ascertained from the next instruction itself by the decoder.

Moreover, as will be explained below, the invention can speed operation even when skipping a single byte instruction which requires a plurality of machine cycles for its execution.

The principle of the invention as described above can be used to imprement an advantageous programming technique whereby the program jumps to a selected one of a sequence or stack of instructions which are all of the same type, executes the selected instruction and then skips all ensuing instructions in the stack.

The invention therefore also concerns apparatus of the type defined wherein the memory stores instructions including sequences of instructions of the same functional type and each composed of a plurality of addressable units. The second object of the invention is to provide means whereby the said ensuing instructions can be quickly skipped.

The invention in this aspect is characterised by first means coupled to the memory for comparing the first unit of an instruction newly read out of the memory with the first unit of the preceding instruction, second means responsive to the first means for generating a signal which indicates, in accordance with the comparison, when the newly read out preceding instructions are of the same functional type, and third means responsive to the said signal to produce an address designating the instruction following the said newly read out instruction by rapidly incrementing the address of the first unit of the said newly read out instruction by the number of units of which the said newly read out instruction is composed, the said number being supplied to the third means by the first means.

The invention will be described by way of example and with reference to the accompanying drawings, in which:

Fig. 1 is a block diagram of an information handling apparatus in the prior art;

Fig. 2 is an operation timing chart for the prior art apparatus illustrated in Fig. 1;

Fig. 3 is a block diagram illustrating the principle employed in information handling apparatus according to the present invention;

Fig. 4 is a block diagram showing one practical example of an address control circuit in the apparatus illustrated in Fig. 3;

Fig. 5 is a block diagram showing another practical example of the address control circuit;

Fig. 6 is a block diagram illustrating an essential part of another preferred embodiment of the information handling apparatus according to the present invention;

Fig. 7A and 7B, respectively, shows an operation timing chart of the prior art apparatus and an operation timing chart of the apparatus shown in Fig. 6; and

Fig. 8 is a block diagram illustrating an essential part of still another preferred embodiment of the present invention.

Referring now to Fig. 1, an information handling apparatus in the prior art is illustrated as a block diagram. A group of instructions which are used to program processing are preliminarily stored in a memory 1, in which a necessary instruction is designated by a content (an address) of an address register 6. To the memory 1 are coupled an address bus 10 and a data bus 9. These buses are respectively formed of a plurality of signal lines so as to be able to handle a plurality of bits simultaneously for executing a high-speed processing. An instruction designated by the content of the address register 6 is read out the memory 1 by a read-out control signal 18 from control circuit 4. Then, an instruction code in the first byte thereof is fetched in an instruction register 2 in response to an instruction fetch signal 16 issued from a control circuit 4. This instruction code is decoded by a decoder 3, and the results are sent to the control circuit 4 via a bus 12. The control circuit 4 produces various kinds of control signals 13 and transmits them to an execution circuit 5 for processing a pragram, on the basis of the decoded results. The execution circuit 5 comprises element means used for executing a program such as registers, an arithmetic-logic unit, gate circuits, etc., and they execute a read-out instruction as controlled in timing by the control signals 13. The control circuit 4 applies an address advance signal 14 to an incrementer 7 in order to read out an instruction to be subsequently executed. The incrementer 7 has an addition facility for incrementing the present content in the address register 6 by +1 in response to the address advance signal 14. Then, the result of the addition (the next address) is set in the address register 6. It is to be noted that the address register 6 is programmable. Namely, any desired address can be set therein via a bus 11 and its content can be reset. In the case where one instruction is formed of a plurality of bytes, it is necessary to designate as many addresses as the bytes. For instance, in the event that one instruction is formed of 3 bytes (3-byte instruction), three addresses generally represented n, n + 1 and n + 2 can be produced. These addresses are prepared by the incrementer 7. Since at least one machine cycle is required for once of memory access, for the purpose of reading out a 3-byte instruction, at least 3 machine cycles are necessitated. In practice, since a time period for excecuting a processing on the basis of the instruction is also necessary, 4 to 6 machine cycles are required.

When a certain instruction is read out of the memory 1 and set in the instruction register 2, this instruction is decoded by the decoder 3. Now, if a condition for canceling the instruction is fulfilled in the apparatus, a control signal 15 is generated to activate an inhibit circuit 8. As a result, an inhibit signal 17 for inhibiting execution of that instruction is sent to the control circuit 4. This inhibit signal 17 serves to inhibit output of the control signals 13 which are normally generated on the basis of the decoded result. Accordingly, the execution circuit 5, which is not applied with the control signals 13, would not execute the inherent processing defined by the instruction in question, but would be held in the previous condition. In the prior art, this time period for holding the previous condition was equal to the time period necessitated for executing the inherent processing defined by the instruction.

The mode of the above-described operations will be now explained with reference to the timing chart in Fig. 2.

In Fig. 2, reference symbols $M_1$ to $M_8$, respectively, denote successive machine cycles. While the machine cycles are normally allotted independently for the respective instructions, here for convenience of explanation, consecutive suffixes are added to the symbols M representing successive machine cycles. That is, description will be made here on instructions to be executed in the 8 machine cycles $M_1$ to $M_8$. Depending upon an apparatus, the durations of machine cycles are different, but here it is assumed that all the machine cycles have the same duration. However it is to be noted that the present invention is will applicable to an apparatus having machine cycles of different durations. In Fig. 2, A, B, C, D and E denote respective instructions, and parenthesized symbols n, n + 1, n + 2, n + 3 and n + 4 noted thereunder means addresses for designating the corresponding instruction. Furthermore, consecutive symbols $B_1$ and $B_2$ indicate that the instruction B is a 2-byte instruction, and they denote the instruction codes of the first byte and the second byte, respectively.

Fig. 2(i) shows the mode of operation in which for a 1-byte instruction A, a 2-byte instruction B and a 1-byte instruction C, processings inherently defined by the respective instructions are executed, and Fig. 2(i)' shows the mode of operation in which among the above-mentioned instructions, for the 2-byte instruction B the processing is made to be not executed. Fig. 2(ii) shows the mode of operation in which the respective instructions are to be normally executed, in the case where all the instructions A to E are 1-byte instructions and among these instructions the instruction C and the instruction D, respectively, necessitate 2 machine cycles and 3 machine cycles, and Fig. 2(ii)' shows the mode of operation in the case where among the above-mentioned instructions the consecutive instructions C and D are made not to be executed.

In the following, the above-referred respective modes of operations will be described in more detail with reference to Fig. 1.

In the mode of operation shown in Fig. 2(i), at first, an address (n) is set in the address register 6, and thereby the instruction A is read out of the memory 1. The read instruction A is a 1-byte instruction, which is decoded by the decoder 3, and the decoded result is transmitted to the control circuit 4. On the basis of this decoded result, the control circuit 4 generates control signals 13 which are necessitated for execution of the instruction A, and in response to the control signals 13 processing is executed in the execution circuit 5. It is assumed that this processing can be executed in one machine cycle $M_1$. When the execution of the instruction A has been finished (practically in the last state in the first machine cycle $M_1$), the control circuit 4 generates an address advance signal 14 for incrementing the content of the address register 6 by +1. As a result, the present content (n) of the address register 6 is modified to (n + 1) by the incrementer 7. The next machine cycle $M_2$ is a cycle allotted to the instruction B, and since the instruction B is a 2-byte instruction, in the machine cycle $M_2$ is read the instruction code $B_1$ of the first byte of the 2 bytes according to the modified address (n + 1). In this instruction code $B_1$ is set an information indicating that the instruction B is a 2-byte instruction. Accordingly, that information is decoded by the decoder 3, and hence a procedure for reading the next subsequent instruction code $B_2$ is effected. This procedure includes the processing for modifying the content of the address register 6 from (n + 1) to (n + 2) by controlling the incrementer 7. And in the next machine cycle $M_3$ is read the instruction code $B_2$ of the second byte. It is assumed that this instruction B necessitates 5 machine cycles in total before the processing designated by the instruction has been completely executed. Accordingly, the processing for the instruction B can be terminated at the end of the machine cycle $M_6$. It is to be noted that during the machine cycles $M_4$ to $M_6$, the content (n + 2) of the address register 6 is not modified. This is because during these machine cycles the address advance signal 14 for controlling the incrementer 7 is not generated by the control circuit 4. A next address advance signal 14 is generated in a last state of the machine cycle $M_6$, thereby the content of the address register 6 is modified from (n + 2) to (n + 3), and so, in the next machine cycle $M_7$ the 1-byte instruction C is read out of the memory 1 and executed. In this way, the instructions A, B and C are successively executed in the seven machine cycles $M_1$ to $M_7$.

Whereas, in the case where among these instructions A, B and C, the instruction B is not necessary to be executed, the mode of operation will take the form illustrated in Fig. 2(i)'. More particularly, the two instruction codes $B_1$ and $B_2$ forming the 2-byte instruction B are read in the instruction register 3 during the machine cycles $M_2$ and $M_3$, respectively, and they are decoded by the decoder 3. However, since a signal 15 indicating non-execution is generated, the inhibit circuit 8 is actuated to transmit an inhibit signal 17 to the control circuit 4, so that the control signals 13 in response to the instruction B may not be transmitted from the control circuit 4 to the execution circuit 5. Accordingly, during the period consisting of the machine cycles $M_2$ to $M_6$ which are normally necessitated for executing the instruction B, the execution circuit 5 makes no operation. In other words, a wasteful time is spent in the machine cycles $M_2$ to $M_6$.

In the mode of operation illustrated in Fig. 2(ii), the instructions A, B, C, D and E, which are all one byte instructions, are executed, and among these instructions, the instructions C and D respectively necessitate 2 machine cycles and 3 machine cycles as a read-out and an execution periods. Accordingly, in the case where these instructions C and D are respectively inhibited from execution by the inhibit circuit 8 (Fig. 2(ii)'), the execution circuit 5 also wastefully spends a time without executing anything during the machine cycles $M_3$ to $M_6$.

As described above, in the heretofore known information handling apparatus, in the case where there occurs an instruction that is not to be executed in a routine which must be passed in view of convenience for a program processing, the time period which is inherently necessary for executing the instruction was elapsed under a non-operation condition. Moreover, this time period is not a period reserved for controlling an operation timing in the apparatus, but reserved merely for the purpose of waiting the next new instruction without executing the intended instruction. Accordingly, it is desirable to make the period under the non-operation condition as short as possible. However, in the prior art apparatus, since a facility of shifting from the instruction to a next new instruction at a high speed was not provided, it was impossible to shorten the period of the non-operation condition. One of the reasons is that addressing means for designating a next instruction is uniquely fixed so as to operate in response to machine cycles necessary to execute the present instruction. Moreover, another reason is that the apparatus is designed in such a manner that when the instruction not to be executed is formed of a plurality of bytes, all the bytes have to be read out of memory before shift to a next new instruction. Accordingly, the processing speed of the heretofore known apparatuses was, in any event, determined solely by the frequency of the operation clock applied to the apparatus and the procedure of processing a program, and it was impossible to further increase the processing speed.

An information handling apparatus illustrating the principle employed in the present invention is shown in the block diagram of Fig. 3. A group of instructions, which are used for executing a program, are stored in a memory 21, and each memory location corresponding to instructions therein is designated by a content (address) of an address register 26. Then the designated instruction is read out of memory 21 in response to a read-out control signal 39. The read-out instruction is fetched into an instruction register 22. The address is transferred in a parallel form of a plurality of bits (for instance, 8 bits) through an address bus, and the instruction is read out in parallel form of a plurality of bits (for instance, 4 bits) through data bus 29. A fetch operation to the instruction register 22 is carried out in response to a fetch control signal 36 issued from a control circuit 24. The instruction set in the instruction register 22 is decoded by a decoder 23, and signals 32 representing the results of decoding are transferred to the control circuit 24. The control circuit 24 applies control signals 33, which are necessitated for executing the instruction, to a program execution circuit 25 on the basis of the decoded results. The execution circuit 25 executes the read-out instruction in response to the control signals 33. The above-mentioned process is similar to that in the conventional information handling apparatus in the prior art as described previously with reference to Figs. 1 and 2. Further, this embodiment has a novel address control circuit 27.

Now let us consider the case where an instruction where execution should be canceled, is handled. In other words, it is assumed that for an instruction, which should be accessed, there occurs a condition that it is unnecessary to execute this instruction. In this case, a signal 35 indicating that execution of the instruction should be inhibited is issued from the decoder 23, or a signal 38 indicating that execution of the instruction should be inhibited is issued from other circuit, such as an external peripheral unit or the like. As a result, an inhibited signal 37 is issued from an inhibit circuit 28, in response to the signal 35 or 35'. The inhibit signal 37 controls the control circuit 24 so that the control signals 33 on the basis of the decoded instruction may not be transferred from the control circuit 24 to the execution circuit 25. As a result, the instruction is nullified, and the execution circuit 25 does not execute the operation defined by the instruction. During this time period, the execution circuit 25 either holds the previous condition or is reset.

In addition, at this moment when it has been detected that the instruction is not to be executed, the decoder 23 applies information for advancing an address of the address register 26 to an address control circuit 27. As this information 34, data representing how many bytes are included in the instruction to be nullified, could be used. This data is normally set in a first byte of the instruction which should be not executed, and therefore, the first byte of the instruction has to be read out of the memory 21 and to be decoded. For instance, if it is a 3-byte instruction, then information representing that the present content of the address register 26 (at this moment the content being the address designating the first byte of the instruction) would be advanced by 3, is applied to the address control circuit 27. As a result, 3 is added to the present content of the address register 26 by an adder means included in the address control circuit 27, and thus the content of the register 26 is modified to the address corresponding to a next new instruction. This modification of an address needs only a very short period, and hence it can be executed within one machine cycle in which the first byte of the instruction not to be executed is read out and decoded. Consequently, an address designation for the remainder bytes of the instruction, which should not be executed, is not performed. Therefore, in the next subsequent machine cycle, since a new address for designating an instruction to be newly read out has been already set in the address register 26, the process can immediately proceed to the execution of the next new instruction without redundantly spending a wasteful time as is the case with the prior art apparatus.

Also, even if the instruction to be nullified is a one-byte instruction, the present invention is effective in the case where the instruction necessitates a plurality of machine cycles for execution. More particularly, the apparatus according to the present invention comprises means for modifying an address without respect to an execution of an instruction, and therefore, a processing for a next new instruction can be immediately carried out after an address modification is terminated. The time period of this modification is at most one machine cycle. In this case, a reset signal 38 is applied to the inhibit circuit 28 after the modification is terminated. Thereby, the inhibit condition of the execution circuit 25 is released, and so, a machine cycle succeeding to the machine cycle of the address modification can be effectively used as a read period for a next new instruction or an execution period for the read-out new instruction without being wasted as a non-execution period.

Now description will be made on a more detailed construction of the address control circuit 27 with reference to Figs. 4 and 5.

Fig. 4 shows one example of the address control circuit employing an adder circuit 40, in which address advancing information 34 is applied to one input, and a present content 42 of the address register 26 is applied to the other input. The result of addition is once set in a register 41 and then transferred to the address register 26 as a new address. As a matter of course, the register 41 could be omitted and replaced by the address register 26.

Fig. 5 shows another example of the address control circuit in which an incrementer 51 is used. From a register 52 which hold the present content of the address register 26, the content is input to the incrementer 51, and it is incremented by +1 each time when a signal 53 issued from a count control circuit 50. The count control circuit 50 detects the necessary number of counts on the basis of the address advance information 34 and thereby controls the incrementer 51. In this case, a signal 53 is a signal for instruction addition, and moreoever, since the addition can be executed at a high speed, it is possible to achieve the operations of addition a plurality of times within one machine cycle. In this connection it is preferable to synchronize the output timing of the signal 53 with a basic operation clock signal of the apparatus.

As described above, according to the present invention, with regard to an instruction consisting of a plurality of bytes or an instruction necessitating a plurality of machine cycles, since a processing for nullifying the instruction can be executed within an extremely short period of time, the program processing speed can be greatly enhanced. It is to be noted that obviously this effect of the present invention can be expected for every type of apparatuses irrespectively of whether the apparatus is of low-speed type or of high-speed type.

In the following, description will be made of preferred embodiments of the present invention with reference to representative examples of practical instructions and procedures for their execution.

Among the instructions used in a micro-computer (for example, 4-bit system), there is a skip instruction. This means such instruction that when a predetermined condition is fulfilled within a computer and/or external units added thereto, a processing is carried out such that an instruction stored at the memory location subsequent to the skip instruction is skipped (that is, the subsequent instruction is disregarded) and execution of the further subsequent instruction (the second instructions subsequent to the skip instruction) is commenced. For instance, it is assumed that a skip instruction reading "skip, if A — register is 0" and a branch or jump instruction reading "branch or jump to address X" subsequent to the skip instruction are stored consecutively in a memory. In this case, if the A-register is 1, then the branch or jump is not effected because the branch or jump instruction is skipped, but if the A-register is not 0, then since the next instruction is not skipped, the next branch or jump instruction is executed, and the processing branches or jumps to address X. Accordingly, by arranging the above-mentioned two instructions consecutively in the above-described manner, one can construct a conditional branch or jump instruction that if the A-register is not 0, then branch or jump to address X, but if it is 0, then not branch or jump (execute the next instruction). Moreover, by combining various other instructions with a skip instruction as subsequent instructions, the skip instruction can achieve more widely such processing that the subsequent instructions are to be executed only when the condition designated by the skip instruction is not fulfilled, and the subsequent instructions are to be disregarded when the condition designated by the skip instruction is fulfilled. The same effect as this skip instruction can be achieved by employing the conventional conditional jump instruction and selecting the destination of jump at the second instruction subsequent to the conditional jump instruction. However, in the case of the jump instruction, it is always necessary to designate the address of the jump location. Whereas, the skip instruction has a merit that regardless of how many bytes the next instruction to be disregarded may comprise, the second instruction subsequent to the skip instruction can be used without designating the address of that instruction at all. Accordingly, the skip instruction is more excellent in view of effective utilization of a memory. The skip instructions for effecting such processing have been widely and conveniently utilized especially in a micro-computer of 4-bit system or 8-bit system or the like which has a fewer kinds of instructions. Furthermore, besides the above-described skip instruction, a processing of disregarding a certain instruction can be effectively utilized also in the following case.

More particularly, it is effectively utilized in the case where a plurality of instructions of the same type are stored in a memory as arrayed consecutively and the apparatus has such function that after a certain instruction stored at an initially designated address has been executed, if an instruction stored at the next designated address is an instruction of the same type in definition as the initial instruction, then the processing should proceed to the further next instruction while disregarding this instruction (the second instruction) (i.e. without executing this instruction). If the above-mentioned function is provided, it can be utilized conveniently as will be described below. For instance, it is assumed now that in the beginning of a certain subroutine is arranged an instruction that a value "3" should be set in an A-register, at the second location is arranged an instruction that a value "4" should be set in the A-register, and at the third location is arranged an instruction that a value "5" should be set in the A-register, and subsequent thereto a routine for carrying out a processing by making use of the content of the A-register is arranged. When the processing enters this subroutine, if it enters at the first instruction that the value "3" should be set in the A-register, then according to this subroutine at first 3 is set in the A-register, but since the next instruction, i.e., the instruction that the value "4" should be set in the A-register is an instruction of the same type as the aforementioned initially executed instruction that the value "3" should be set in the A-register (such instructions being defined to be of the same type), the above-mentioned next instruction is disregarded as a result of the above-referred function, and so, the processing proceeds further to the next subsequent instruction that the value "5" should be set in the A-register. However, this next subsequent instruction is disregarded because it is also of the same type as the preceding instruction, and after all, in this case, the subroutine would be executed by employing the value "3" initially set in the A-register as a parameter. On the other hand, upon initially entering this subroutine, if the processing enters at the second instruction that the value "4" should be set in the A-register, then due to a similar processing to the above-described, in this case the subroutine would be executed by employing the value "4" as a parameter. Likewise, if the processing enters at the third instruction that the value "5" should be set in the A-register, then the subroutine would be executed by employing the value 5 as a parameter. In this way, one can simply prepare a subroutine in which a processing is executed with different parameters by merely variably designating the initial entrance address. Throughout this specification, the aforementioned function of defining a sequence or stack of given instructions of the same type, in the case where instructions of the same type appear consecutively, only the designated initial instruction being executed, the subsequently appearing instruction or instructions of the same type being disregarded, is called "stack-up function of instructions".

Let us now consider the case where upon carrying out the aforementioned skip instruction or stack-up function of instructions, the correspondingly required condition has been fulfilled (that is, for a skip instruction, the case where the condition designated by this instruction has been fulfilled, and for a stack-up function of instructions, the case where the condition that a certain instruction is of the same type as the previous instruction has been fulfilled).

In the heretofore known microprogram control apparatus, a method was employed such that during the period when the instruction is disregarded, an inhibit circuit for inhibiting the execution is activated. Therefore, for an instruction which necessitates, for example, 6 machine cycles for execution, in the heretofore known apparatus even in the case of nullifying this instruction, it was resulted that only after 6 machine cycles have been spent similarly to regular execution of this instruction, the processing can first shift to the next instruction, and so, the known apparatus had a shortcoming that the processing time was unnecessarily prolonged.

Whereas, a microprogram control apparatus according to one preferred embodiment of the present invention as will be described later, comprises a microprogram counter for designating a memory address of a micro-instruction, a decoder for determining whether or not a decoded micro-instruction belongs to a group of micro-instructions defined to be of the same type as the micro-instruction processed immediately before the decoded micro-instruction, means for suppressing execution of the decoded micro-instruction in the event that the micro-instruction decoded by said decoder has been determined to be of the same type as the micro-instruction processed immediately before the decoded micro-instruction, and means for setting the content of said microprogram counter so as to designate the address of the micro-instruction next to the decoded microprogram in the aforementioned event.

Now the above-outlined microprogram control apparatus according to the present invention will be described in more detail with reference to Fig. 6. At first, description will be made in connection to a skip instruction. Fig. 6 is a block diagram adapted for explaining the operation in response to a skip instruction. Reference numberal 61 designates a micro-instruction memory circuit. In the case of executing a given instruction, during a first machine cycle for that instruction, at first a first byte of this instruction stored at an address designated by an address counter 63 is read out of the memory 61. Then, it is stored in an instruction register 62. When the first byte of the micro-instruction has been read in the instruction register 62 in the above-described manner, this is decoded by a decoder 64, and depending upon whether this instruction is a 1-byte instruction, 2-byte instruction, 3-byte instruction, or else, a control circuit 65 controls a program counter control circuit 66. As a result, for each one of the machine cycles necessitated for further decoding this instruction, the content of the program counter 63 is stepped one by one, and thereby all the bytes belonging to that instruction are successively fetched in the instruction register 62 to be decoded. In this way, the processing designated by this decoded micro-instruction is executed by an execution circuit (not shown) that is controlled by the control circuit 65. Then, after a number of machine cycles which are necessitated for executing this instruction have elapsed, the control circuit 65 further advances the content of the program counter 63 by 1 via the program counter control circuit 66. And in the next machine cycle, the first byte of the next instruction stored at the address designated by the content of this program counter 63 is read out, and thus the processing proceeds to execution of the next new instruction. Here it is assumed that a skip instruction has been fetched in the instruction register 62. As described above this is decoded by the instruction decoder 64, and due to the designation that this instruction is a skip instruction, a logic level on a skip instruction designating line 67 is turned to "1". Furthermore, the portion designating a skip condition in this skip instruction is fed to a skip condition selection circuit 68, in which among various skip conditional signals 69, a conditional signal designated by this skip condition is selected. In these conditional signals 69 are included various conditional signals such as, for example, a signal adapted to take a logic level of "1" if the content of the aforementioned A-register is 0, but take a logic level of "0" if the content of the A-register is not 0, a signal adapted to take a logic level of "1" if input data are present at a designated into port but take a logic of "0" if input data are not present, or a signal indicating a detected condition of a carry output and/or a flag of an ALU. The conditional signal selected in the skip condition selection circuit 68 is combined with the signal on the above-mentioned skip instruction designating line 67 by means of an AND circuit 70, and applied to a set terminal of a flip-flop 71.

Accordingly, the flip-flop 71 can be set provided that a skip instruction has been decoded and also that the condition designated by the skip instruction is fulfilled. When the above-described processing of the skip instruction has been terminated, the control circuit 65 controls the program counter control circuit 66 so as to advance the content of the program counter 63 by 1. And in the next machine cycle, the first byte of the instruction starting from the address next to this skip instruction is fetched in the instruction register 62. In this way, since information, of how many bytes a given instruction is formed, can be obtained by decoding the first byte of instruction, this information indicating a number of bytes of an instruction is entracted and applied to one input of an adder 73 via a byte number output line 72. To the other input of this adder 73 is applied the content of the program counter 63. Now, at the time point when the first byte of the instruction was read, the decoding of the number of bytes in that instruction was completed and also the addition of the input of the byte number and the content of the program counter 63 by means of the adder 73 has been completed in the above-described manner, the control circuit 65 outputs a program counter write pulse through a program counter write pulse line 74. This program counter write pulse line 74 and the output line of the above-mentioned flip-flop 71 are combined in logic by a second AND circuit 75. Hence, so long as the flip-flop 71 is set (that is, only when the preceding instruction was a skip instruction and the designated skip condition is fulfilled), on the output side of the second AND circuit 75 appears the write pulse issued from the control circuit 75 via the program counter write pulse output line 74. This write pulse controls the program counter control circuit 66 to write the output of the adder 73 in the program counter 63. Then, the content of this program counter 63 would designate the first byte of the second instruction subsequent to the skip instruction. The above-described processing is completed generally in the machine cycle in which the first byte of the instruction immediately subsequent to the aforementioned skip instruction. Now, the first byte of the thus designated second instruction is fetched in the instruction register 62 during the next machine cycle, and at this moment the processing first enters the first machine cycle of this instruction.

It is to be noted that control circuit 65 generates a reset pulse at a time point near to the end of this machine cycle after it generated the write pulse on the program counter write pulse line 74. This reset pulse is applied to a reset terminal of the flip-flop 71 via a reset pulse line 76, and so, the flip-flop 71 is reset. Moreover, the output of the flip-flop 71 is, in addition to serving as one input of the second AND circuit 75, applied via an instruction execution suppress signal line 77 to the control circuit 65 as an instruction execution suppress signal. During the period when the logic level of this signal line is "1", except for the generation of the program counter write pulse and generation of the reset pulse, the other processing to be executed as a result of decoding of the first byte, is suppressed. At the same time, the trailing edge portion of this suppress signal is utilized to set the control circuit 65 so that in the next machine cycle the byte fetched in the instruction register 62 may be processed as the first byte of the next new instruction.

As a matter of course, even if a skip instruction is decoded, in the event that the condition designated by the skip instruction is not fulfilled, since the flip-flop 71 is not set, the instruction next to the skip instruction is executed according to the regular process as described in the initial part of the description of the apparatus shown in Fig. 6.

In this way, the previously described function in response to the skip instruction can be realized. As will be apparent from the above description, in the case where a skip condition designated by a skip instruction is fulfilled, regardless of the instruction subsequent to the skip instruction (regardless of how many machine cycles are necessitated for regularly executing this instruction), it is always possible to nullify that instruction and proceed to the second new instruction within at most one machine cycle.

The timing chart of the above-described processing is illustrated in Fig. 7. Fig. 7A represents the timing relation in the case of the prior art apparatus. Assuming that the memory address where a skip instruction is stored in *n*, initially when the content of the program counter is *n*, the skip instruction is read out. Here it is assumed that the skip condition is not fulfilled. Then, in the next machine cycle, the content of the program counter is incremented to $n + 1$, and the first byte of the next instruction is read out. It is assumed that this instruction is a 3-byte instruction (for instance, a call instruction) which necessitates 6 machine cycles for its execution. In this assumed case, the content of the program counter steps up to $n + 3$ in the subsequent two machine cycles to read out all the instruction of 3 bytes, and execution of this instruction is completed by spending further 3 machine cycles. And, in the next subsequent machine cycle, the program counter steps to $n + 4$ to read out the first byte of the second instruction after the skip instruction, and the processing newly enters execution of this instruction. The processing in the above-described case is represented by the second diagram as noted "Skip Condition not Fulfilled" in Fig. 7A.

Whereas, in the event that the skip condition is fulfilled, during all the machine cycles in which the instruction just subsequent to the skip instruction (in the above-assumed case, a call instruction) is to executed, in place of the inherent execution of the call instruction a non-operation condition is maintained, and after the 6 machine cycles have been spent without executing any processing effectively, the processing enters execution of the second instruction subsequent to the skip instruction. This processing is represented by the third diagram as noted "Skip Condition Fulfilled" in Fig. 7A.

On the other hand, the timing chart in the case of the apparatus according to the present invention shown in Fig. 6, is illustrated in Fig. 7B. In this case also, when the skip condition is not fulfilled, the mode of processing is quite similar to that in the case of the prior art apparatus shown in Fig. 7A. However, in the event that the skip condition is fulfilled, as shown by the third diagram as noted "Skip Condition Fulfilled" in Fig. 7B, in the next one machine cycle subsequent to the skip instruction the program counter is advanced by the number of bytes of the instruction just subsequent to the skip instruction (the number of bytes of the instruction to be skipped) at a time. In the illustrated example, the program counter is advanced by 3 at a time. Hence, in the next subsequent machine cycle, the processing can enter execution of the second instruction subsequent to the skip instruction.

It is to be noted that while the address of the second instruction was directly obtained by adding the content of the program counter and the number of bytes of the instruction just subsequent to the skip instruction by means of the adder and thereby the skip processing was achieved within a minimum processing time in the preferred embodiment of the present invention illustrated in Fig. 6, instead the skip processing can be effected in the following manner.

That is, both the output of the flip-flop 71 and the output on the byte number output line 72 are directly applied to the program counter control circuit 66. In this alternative embodiment, in the event that the output of the flip-flop 71 has become logic "1", the content of the program counter 63 could be stepped at a higher cycle repetition frequency than that employed in the regular instruction processing by a factor of the number of bytes designated by the output on the byte number output line 72. By making the above-mentioned provision, the processing time in the case where the skip condition is fulfilled, can be made shorter than that of the prior art apparatus.

While the present invention has been described above in connection to nullification of the instructions to be skipped in the case of employing a skip instruction, the invention is equally applicable to the case where the above referred "stack-up function of instructions" is utilized.

A still another preferred embodiment of the present invention is illustrated in a block diagram in Fig. 8. While reference numeral 104 designates a decoder having a similar function to the instruction decoder 64 in Fig. 6, the former is further added with the following function. That is, when a first byte of a given instruction has been fetched in an instruction register 82, the decoder 104 compares the information contained in this newly read-out byte with the information contained in the first byte of the just preceding instruction which is stored in the decoder 104, to check whether or not the newly read-out instruction is of the same type in definition as the just preceding instruction. For this checking, it is only necessary to compare the respective instructions with respect to the principal portions of their codes or with respect to their code portions indicating the type of instructions.

In this way, if the present instruction is detected to be an instruction of the same type as the just preceding instruction, then the decoder 104 outputs a pulse of logic level "1" onto a stack-up instruction detection line 107. This detection line 107 is coupled to a set terminal of a flip-flop 91, which has a similar function to the flip-flop 71 in Fig. 6, to set the flip-flop 91. Once this flip-flop 91 is set, then the subsequent processing is almost similar to that described above with reference to Fig. 6, and in a program counter 83 is written an output of an adder 93 which operates to add the present content of the program counter 83 with an output on a byte number output line 92 which output represents the number of bytes of the decoded instruction. In addition, the set output of the flip-flop 91 controls a control circuit 85 via an instruction execution suppress signal line 97 so that execution of the decoded instruction may be suppressed. In this way, the above-mentioned processing is completed within the same machine cycle in which the first byte of this instruction was read out, similarly to the processing described above with reference to Fig. 6, and in the next subsequent machine cycle, the first byte of the next new instruction is read in the instruction register 82, so that the processing can immediately enter the machine cycle for executing the instruction.

Also, as noted previously in connection to Fig. 6, instead of employing the adder 93 in Fig. 8 the output of the flip-flop 91 and the output on the byte number output line 92 could be directly applied to a program counter control circuit 86. In this modified case, when the output of the flip-flop 91 takes a logic level "1", the content of the program counter 83 could be stepped at a higher cycle repetition frequency than that employed in the regular instruction processing by a factor of the number of bytes designated by the output on the byte number output line 92.

As described above, according to the present invention there is obtained an advantage that in

the case of nullifying a subsequent instruction or instructions of the same type by employing the stack-up function of instructions, a microprogram control apparatus which can process within a shorter processing time than the prior art apparatus, is provided. Furthermore, it will be obvious that in the above-described respective embodiments, if necessary, control can be made such that an instruction appearing a plurality of steps after a given instruction may be nullified.

## Claims

1. Information handling apparatus with a memory (61) for storing instructions including a skip instruction, a first following instruction composed of a plurality of addressable units and a second following instruction, addressing means (63) coupled to the memory for reading instruction units out of the memory sequentially, a decoder (64) for decoding instruction units read out of the memory, control means (65) controlling the apparatus in response to the decoded instruction units including controlling the addressing means (63) for sequential advance of addresses, skip signal means (71, 75) coupled to the decoding means for generating a skip signal when the skip instruction is read out of the memory, and address skip means (66, 73) coupled to the skip signal means (71, 75) for jumping on to an address designating the second following instruction characterised in that the addressing means (63) advance to the address of the said first following instruction and the address skip means (66, 73) then rapidly increment the address of the first unit of the said first following instruction by the number of units of which the said first following instruction is composed, the said number being supplied to the address skip means by the decoder (64).

2. Apparatus according to claim 1, characterised in that the skip signal means (71, 75) inhibit the skip signal when the first following instruction is to be executed.

3. Information handling apparatus with a memory (81) for storing instructions including sequences of instructions of the same functional type and each composed of a plurality of addressable units, addressing means (83) coupled to the memory for reading instruction units out of the memory sequentially, a decoder (104) for decoding instruction units read out of the memory, and control means (85) controlling the apparatus in response to the decoded instruction units including controlling the addressing means (83) for sequential advance of addresses, characterised by first means (104) coupled to the memory (81) for comparing the first unit of an instruction newly read out of the memory with the first unit of the preceding instruction, second means (91, 95) responsive to the first means for generating a signal which indicates, in accordance with the comparison, when the newly read out preceding instructions are of the same functional type, and third means (86, 93) responsive to the said signal to produce an address designating the instruction following the said newly read out instruction by rapidly incrementing the address of the first unit of the said newly read out instruction by the number of units of which the said newly read out instruction is composed, the said number being supplied to the third means (86, 93) by the first means (104).

## Revendications

1. Appareil de traitement d'informations avec une mémoire (61) pour stocker des instructions comprenant une instruction de branchement, une première instruction suivante comportant une pluralité d'unités adressables et une seconde instruction suivante, un moyen d'adressage (63) couplé à la mémoire pour sortir séquentiellement des unités d'instruction de la mémoire, un décodeur (64) pour décoder des unités d'instruction sorties de la mémoire, un moyen de commande (65) pour commander l'appareil en réponse aux unités d'instruction décodées comprenant la commande du moyen d'adressage (63) pour faire avancer séquentiellement des adresses, un moyen de signal de branchement (71, 75) couplé au moyen de décodage pour produire un signal de branchement lorsque l'instruction de branchement est sortie de la mémoire, et un moyen de branchement d'adresse (66, 73) couplé au moyen de signal de branchement (71, 75) pour sauter à une adresse désignant la seconde instruction suivante, caractérisé en ce que le moyen d'adressage (63) avance à l'adresse de la première instruction suivante et le moyen de branchement d'adresse (66, 73) incrémente alors rapidement l'adresse de la première unité de la première instruction suivante suivant le nombre d'unités dont la première instruction suivante est constituée, ce nombre étant fourni au moyen de branchement d'adresse par le décodeur (64).

2. Appareil selon la revendication 1, caractérisé en ce que le moyen de signal de branchement (71, 75 inhibe le signal de branchement lorsqu'il y a exécution de la première instruction suivante.

3. Appareil de traitement d'informations avec une mémoire (81) pour stocker des instructions comprenant des séquences d'instructions du même type fonctionnel et constituées chacune d'une pluralité d'unités adressables, un moyen d'adressage (83) couplé à la mémoire pour sortir séquentiellement des unités d'instruction de la mémoire, un décodeur (104) pour décoder des unités d'instruction sorties de la mémoire, et un moyen de commande (85) commandant l'appareil en réponse aux unités d'instruction décodées comprenant la commande des moyens d'adressage (83) pour une avance séquentielle d'adresses, caractérisé par un premier moyen (104) couplé à la mémoire (81) afin de comparer la première unité d'une instruction nouvellement sortie de la mémoire à la première unité de l'instruction précédente, un second moyen (91, 95) répondant au premier moyen pour produire un signal qui indique, en conformité avec la comparaison, le moment où les instructions précédentes nouvellement sorties sont du même type fonctionnel, et un troisième moyen (86, 93) répondant audit signal pour produire une adresse désignant l'instruction suivant l'instruction nouvellement sortie par incrémentation rapide de l'adresse de la première unité de l'instruction nouvellement sortie suivant le nombre d'unités dont est composée l'instruction nouvellement sortie, ce nombre étant fourni au troisième moyen (86, 93) par le premier moyen (104).

**Patentansprüche**

1. Informationsverarbeitungsgerät mit einem Speicher (61) zum Speichern von Maschinenbefehlen einschließlich einem Sprungbefehl, wobei ein erster Folgebefehl aus mehreren adressierbaren Einheiten und einem zweiten Folgebefehl besteht, einer mit dem Speicher verbundenen Adressiereinrichtung (63) zum sequentiellen Auslesen der Befehlseinheiten aus dem Speicher, einem Decoder (64) zum Decodieren der aus dem Speicher ausgelesenen Befehlseinheiten, einer Steuereinrichtung (65) zum Steuern des Geräts in Abhängigkeit von den decodierten Befehlseinheiten mit einer Steuerung der Adressiereinrichtung (63) zum sequentiellen Fortschalten der Adressen, einer mit dem Decoder verbundenen Sprungsignaleinrichtung (71, 75) zum Erzeugen eines Sprungsignals, wenn der Sprungbefehl aus dem Speicher ausgelesen wird, und mit einer mit der Sprungsignaleinrichtung (71, 75) verbundenen Adressensprungeinrichtung (66, 73) zum Anspringen einer Adresse, die den zweiten Folgebefehl enthält, dadurch gekennzeichnet, daß die Adressiereinrichtung (63) zur Adresse des ersten Folgebefehls fortschaltet und die Adressensprungeinrichtung (66, 73) dann rasch die Adresse der ersten Einheit des ersten Folgebefehls um die Anzahl der Einheiten erhöht, aus denen der erste Folgebefehl besteht, wobei die Anzahl der Adressensprungeinrichtung durch den Decoder (64) zugeführt wird.

2. Gerät nach Anspruch 1, dadurch gekennzeichnet, daß die Sprungsignaleinrichtung (71, 75) das Sprungsignal sperrt, wenn der erste Folgebefehl ausgeführt wird.

3. Informationsverarbeitungsgerät mit einem Speicher (81) zum Speichern von Befehlen mit einer Befehlsfolge des gleichen funktionalen Typs, die jeweils aus mehreren adressierbaren Einheiten bestehen, einer mit dem Speicher verbundenen Adressiereinrichtung (83) zum sequentiellen Auslesen von Befehlseinheiten aus dem Speicher, einem Decoder (104) zum Decodieren von aus dem Speicher ausgelesenen Befehlseinheiten und mit einer Steuereinrichtung (85) zum Steuern des Geräts in Abhängigkeit von den decodierten Befehlseinheiten und Steuern der Adressiereinrichtung (83) zum sequentiellen Fortschalten der Adressen, gekennzeichnet durch eine mit dem Speicher (81) verbundene erste Einrichtung (104) zum Vergleichen der ersten neu aus dem Speicher ausgelesenen Befehlseinheit mit der ersten Befehlseinheit des vorangegangenen Befehls, eine zweite auf die erste Einrichtung ansprechende Einrichtung (91, 95) zum Erzeugen eines Signals, das aufgrund des Vergleichs anzeigt, wenn die neu ausgelesenen vorangehenden Befehle vom gleichen funktionalen Typ sind, und durch eine auf das Signal ansprechende dritte Einrichtung (86, 93) zum Erzeugen einer Adresse, die den Befehl nach dem neu ausgelesenen Befehl angibt durch schnelles Inkrementieren der Adresse der ersten Einheit des neu ausgelesenen Befehls um die Anzahl der Einheiten, aus der der neu ausgelesene Befehl besteht, wobei die Anzahl der dritten Einrichtung (86, 93) durch die erste Einrichtung (104) zugeführt wird.

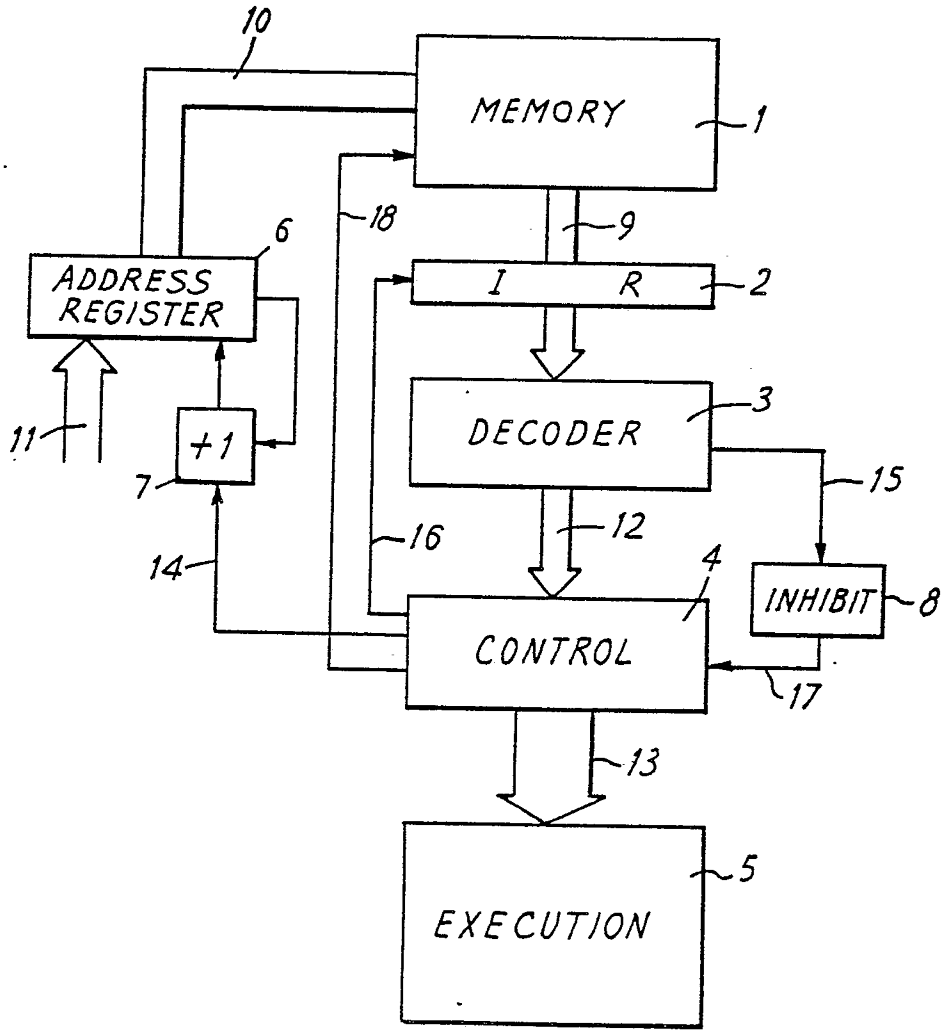


FIG.1 (PRIOR ART)

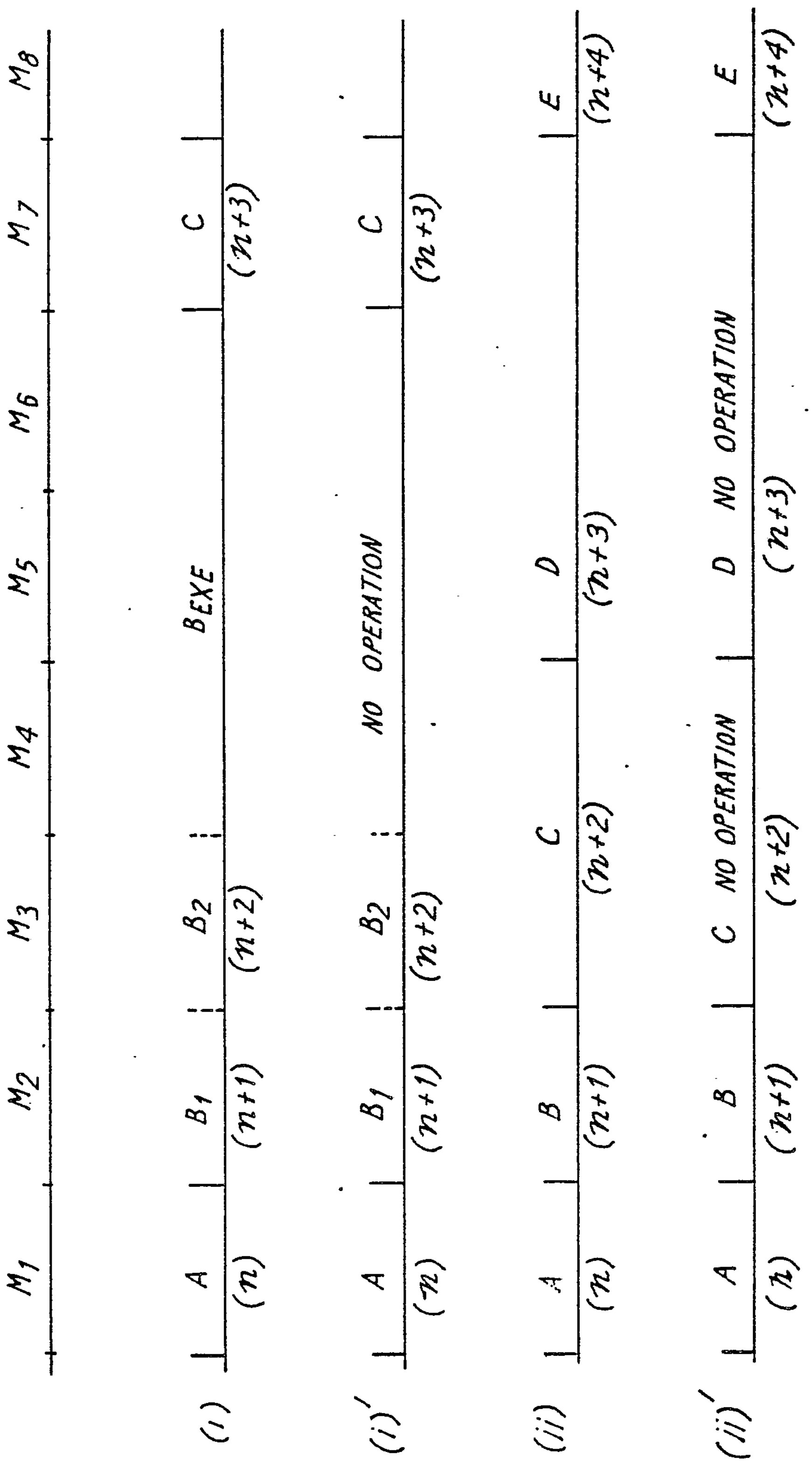


FIG. 2 (PRIOR ART)

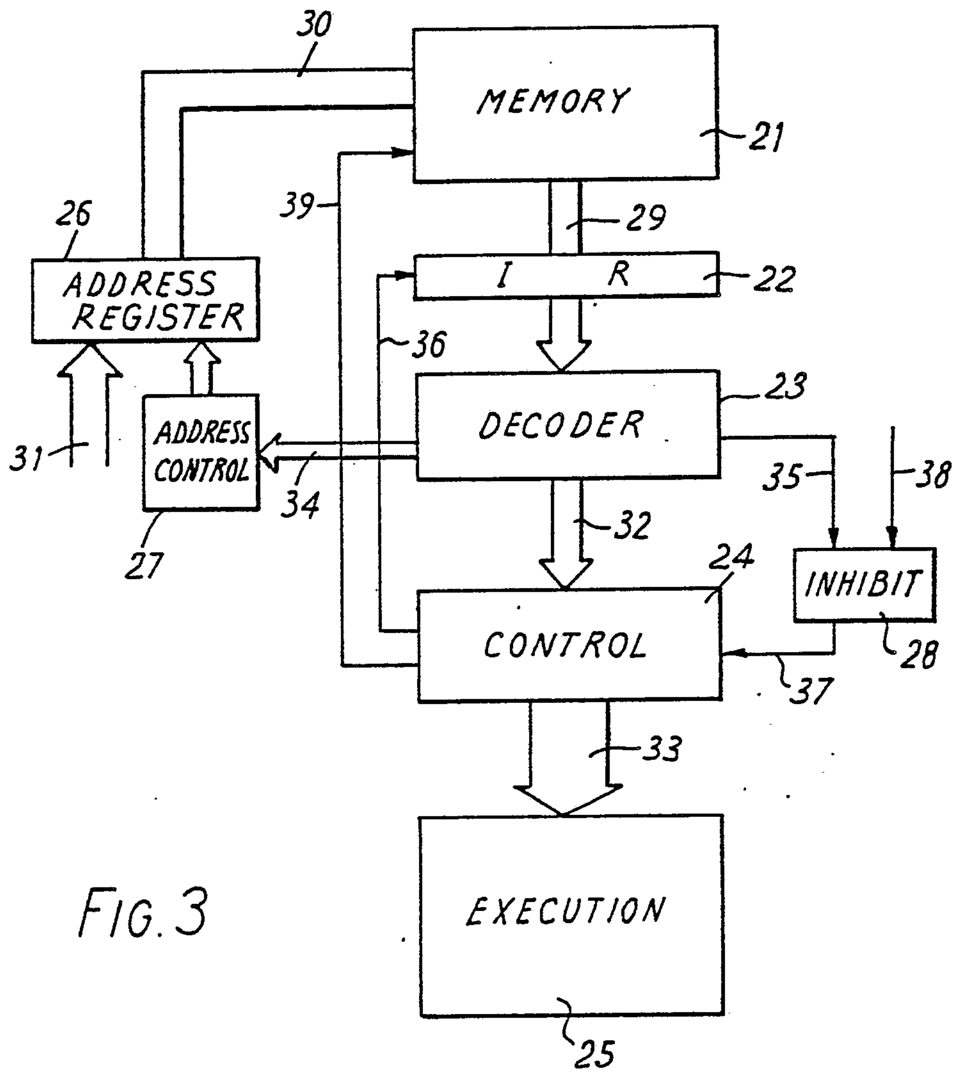
30
MEMORY
21
29
26
39
ADDRESS REGISTER
I R
22
36
23
DECODER
ADDRESS CONTROL
31
35
38
34
32
27
24
INHIBIT
CONTROL
28
37
33
EXECUTION
25

FIG. 3

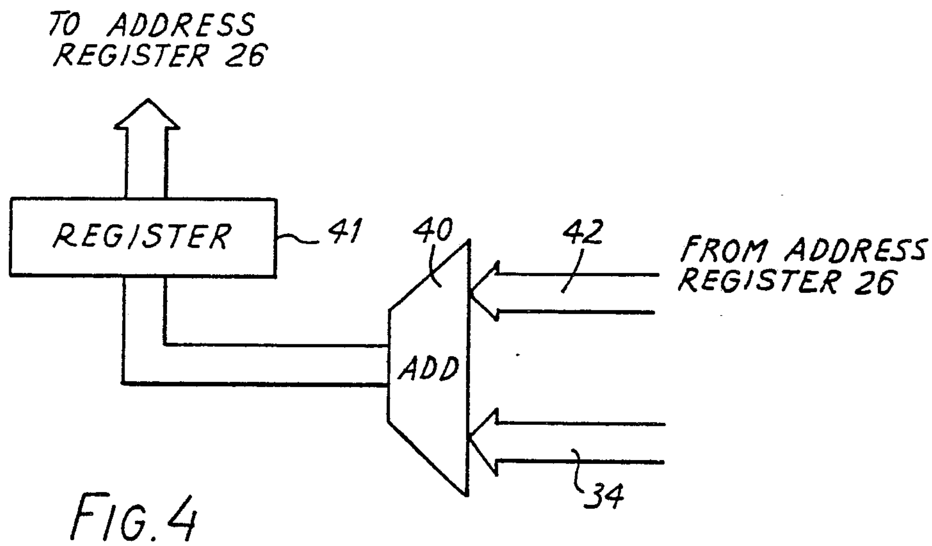
TO ADDRESS
REGISTER 26
REGISTER
41
40
42
FROM ADDRESS
REGISTER 26
ADD
34

FIG.4

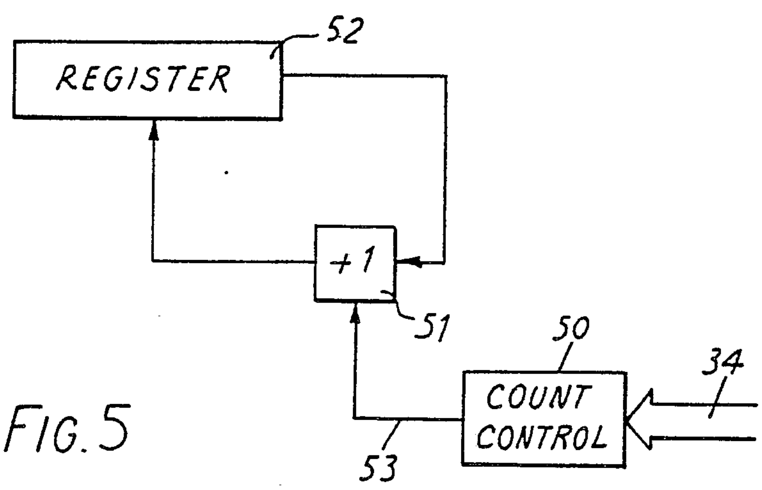
52
REGISTER
+1
51
50
34
COUNT
CONTROL
53

FIG.5

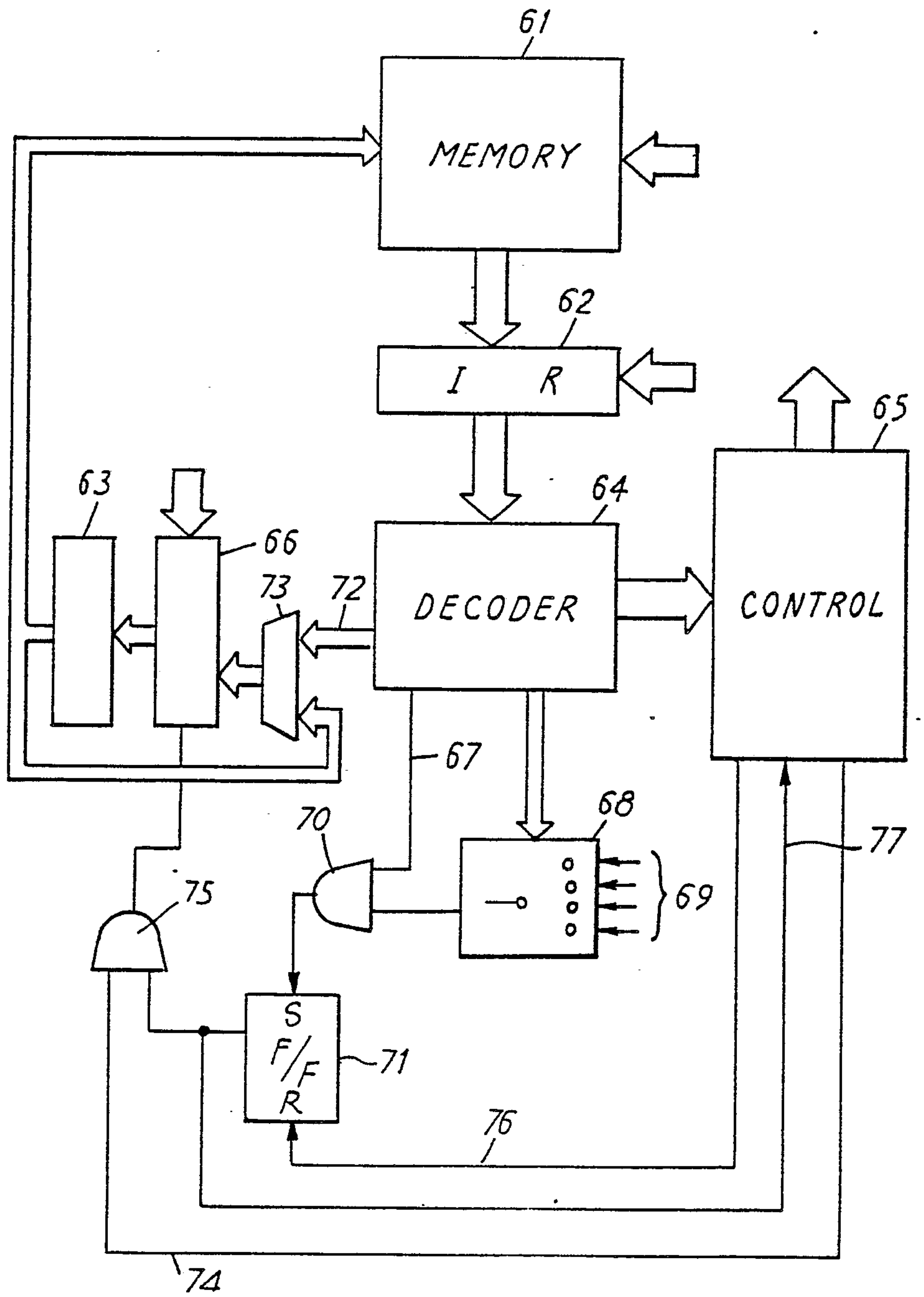
61
MEMORY
62
I R
65
63
66
64
73
72
DECODER
CONTROL
67
68
70
77
75
69
S
F/F
R
71
76
74

FIG.6

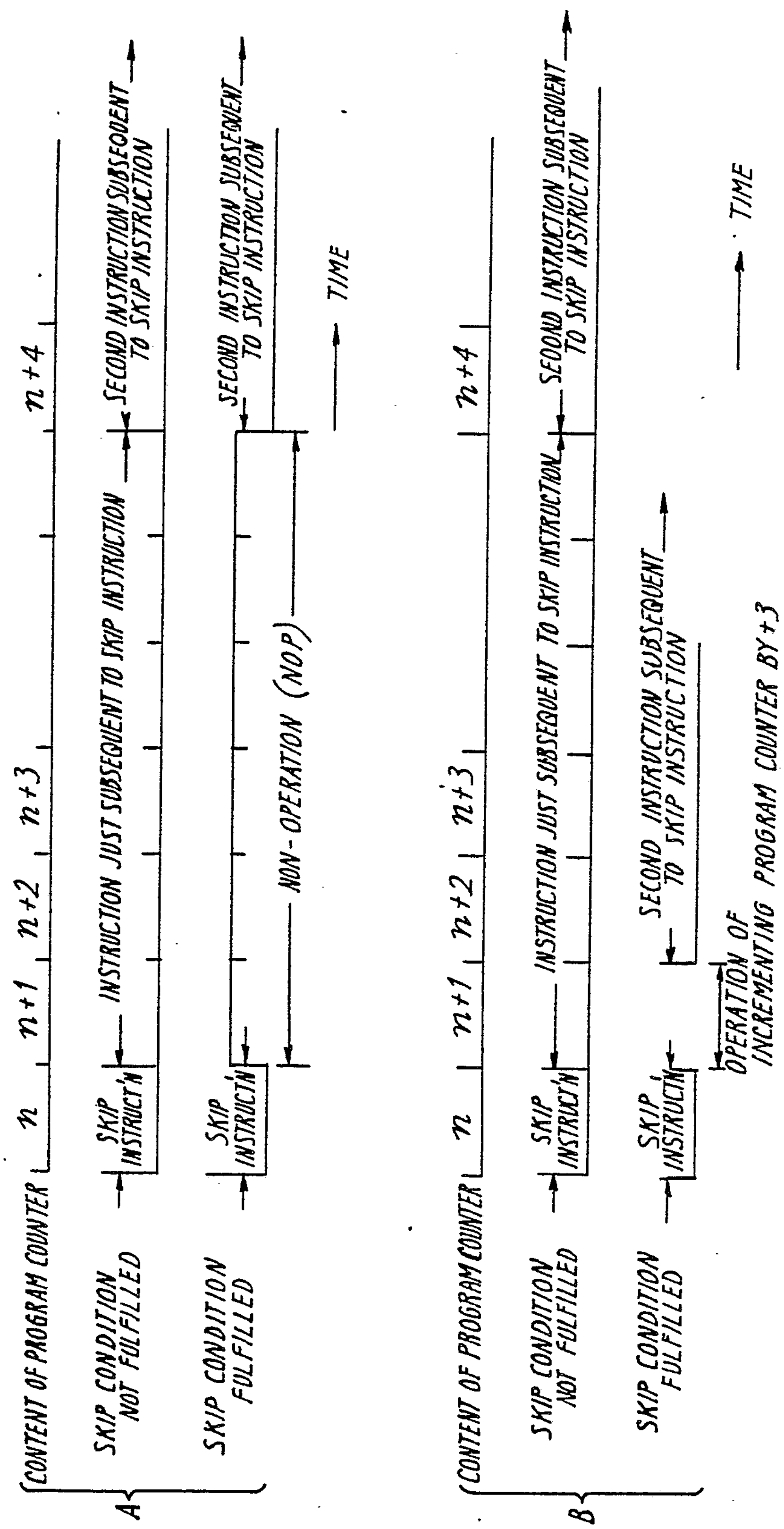
A
CONTENT OF PROGRAM COUNTER
n
n+1
n+2
n+3
n+4
SKIP CONDITION NOT FULFILLED
SKIP INSTRUCT'N
INSTRUCTION JUST SUBSEQUENT TO SKIP INSTRUCTION
SECOND INSTRUCTION SUBSEQUENT TO SKIP INSTRUCTION
SKIP CONDITION FULFILLED
SKIP INSTRUCTN
NON-OPERATION (NOP)
SECOND INSTRUCTION SUBSEQUENT TO SKIP INSTRUCTION
TIME
B
CONTENT OF PROGRAM COUNTER
n
n+1
n+2
n+3
n+4
SKIP CONDITION NOT FULFILLED
SKIP INSTRUCT'N
INSTRUCTION JUST SUBSEQUENT TO SKIP INSTRUCTION
SECOND INSTRUCTION SUBSEQUENT TO SKIP INSTRUCTION
SKIP CONDITION FULFILLED
SKIP INSTRUCTN
OPERATION OF INCREMENTING PROGRAM COUNTER BY +3
SECOND INSTRUCTION SUBSEQUENT TO SKIP INSTRUCTION
TIME

FIG.7

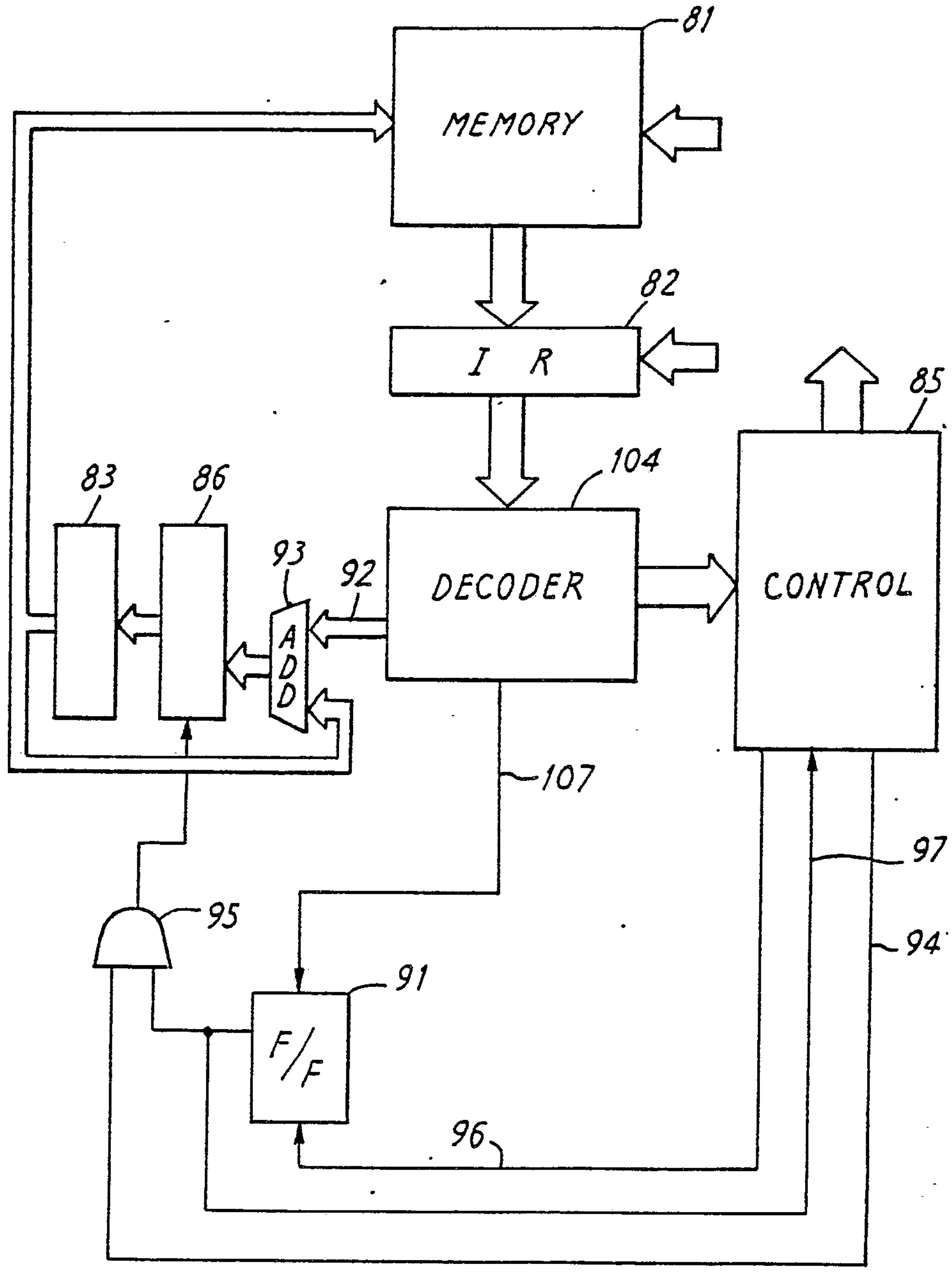
81
MEMORY
82
I R
85
104
83
86
93
92
DECODER
CONTROL
A
D
D
107
97
95
94
91
F/F
96

FIG. 8